# EUROPEAN PATENT SPECIFICATION

(11) **EP 4 378 440 B1**
(45) Date of publication and mention of the grant of the patent: **08.04.2026**
(21) Application number: 22210621.3
(22) Date of filing: 30.11.2022
(51) Int. Cl.: A61G 5/04, A61G 5/10, G06F 3/048

(54) **CONFIGURATION DEVICE FOR CONFIGURING A POWER WHEELCHAIR**
KONFIGURATIONSVORRICHTUNG ZUR KONFIGURATION EINES ANGETRIEBENEN ROLLSTUHLS
DISPOSITIF DE CONFIGURATION POUR CONFIGURER UN FAUTEUIL ROULANT ÉLECTRIQUE

(43) Date of publication of application: 05.06.2024
(73) Proprietor: Permobil AB, 851 24 Sundsvall (SE)
(72) Inventor: Forslund, Magnus, 865 92 Alnö (SE)
(74) Representative: Kransell & Wennborg KB

(56) References cited:
- EP-B2- 1 928 386
- US-A1- 2005 075 758
- US-A1- 2007 050 111
- US-A1- 2020 197 247
- US-A1- 2021 026 530
- US-B2- 9 228 885

## Description

### TECHNICAL FIELD

The present disclosure generally relates to power wheelchairs.

### BACKGROUND

Power wheelchairs typically comprise a control system which control functions, such as drive modes and seating sequences, of the wheelchair. Any re-programming of the control system involves adjusting a number of parameters and is thus rather cumbersome and unintuitive. <insert page 1a>

### SUMMARY

A general object of the present disclosure is to provide a configuration device for power wheelchairs which solves or at least mitigates the problems of the prior art.

There is hence according to a first aspect of the present disclosure provided a configuration device according to claim 1.

The configuration of the setting of the power wheelchair may thereby be simplified. Especially, the simplification is obtained because the visual states are associated with respective sets of wheelchair parameters that are used for programming the power wheelchair. Further, the configuration becomes standardised in the sense that only certain wheelchair parameter setting combinations are possible, as predefined by the set of wheelchair parameter settings associated with each visual state. The risk of erroneously configuring the power wheelchair is thus reduced.

The communications unit may according to one example be configured to also send the set of wheelchair parameters to a remote database or server, e.g., in the cloud, or a database or server at a wheelchair fleet operator. Traceability of the programming history of the power wheelchair may thereby US2007050111 A1 discloses a method and apparatus for automated positioning of user support surfaces in a power driven wheelchair. By programming position parameters corresponding to user support surfaces of a power driven wheelchair, movement of the user support surfaces is automated. The user support surfaces can be positioned individually, as part of a sequence or as part of a series of sequences. Accordingly, a user can position the user support surfaces of the wheelchair to a predefined position.

US2021/0026530 A1 discloses a handset for controlling a device having a plurality of movable parts defining a support, or a movable surface. The handset has a housing, and touchscreen display on a front face of the housing, the touchscreen display being adapted to display an image representative of a device or surface to be controlled. The handset has a control system within the housing which is connected to the touchscreen display. The control system has an input module which is adapted to receive an input command in the form of a gesture drawn on the touchscreen display, and an output module which is adapted to generate an output control signal, associated with the input command, for transmission to the device or surface. be provided. It is thus possible to recreate a configuration in case a faulty electronics component storing the wheelchair parameter settings programmed by means of the configuration device has to be replaced, or to configure a replacement power wheelchair.

According to one example, the processing circuitry may be arranged to pair the set of wheelchair parameters with a specific user identifier and the communications unit may be configured to send the set of wheelchair parameters with the associated specific user identifier to a remote database or server for storing the set of wheelchair parameters and the associated specific user identifier. The wheelchair parameters thus become associated with a specific user, and this facilitates factory configuration of a new power wheelchair in case a new wheelchair is ordered for the user associated with the specific user identifier. The new power wheelchair may thus be shipped to the user with a familiar wheelchair functionality configuration instead of having to be configured at delivery to a user.

According to one embodiment the processing circuitry is arranged to determine a set of wheelchair parameters for every intermediate visual state between the first visual state and the second visual state, and wherein the communications unit is arranged to send all sets to the power wheelchair. This may for example be the case if the wheelchair functionality setting is seat positioning. In this case, each intermediate visual state between the first visual position and the second visual position may be associated with e.g., respective sets of wheelchair actuator settings of a set of actuators controlling seat position, between the first visual position and the second visual position.

According to one embodiment the processing circuitry is arranged to determine an order of sequence of the sets associated with all the intermediate visual states, wherein the communications unit is arranged to send the order of sequence of the sets to the power wheelchair. Thus, for example in case the wheelchair functionality is seat positioning, the sequence order of the actuator positions for causing movement of a seating system of the power wheelchair between two seat positions is sent to the power wheelchair.

According to one embodiment the processing circuitry is arranged to determine the set of wheelchair parameters based on a look-up table, database, or a mathematical function that associates every visual state of the graphical representation with a set of wheelchair parameters.

According to one embodiment the wheelchair parameter settings include wheelchair actuator settings. The wheelchair actuator settings may be settings for controlling actuators, i.e., actuators that control a seating system of the powered wheelchair.

According to one embodiment the processing circuitry is arranged to receive an identifier associated with a power wheelchair, and in response thereto enable displaying of the graphical representation on the display unit, wherein the communications unit is arranged to send the set of wheelchair parameters to the power wheelchair associated with the identifier.

The identifier may or may not be unique to the power wheelchair.

The identifier may for example be a chassis identifier or serial number of the power wheelchair.

According to one embodiment the communications unit is arranged to receive the identifier only via a local wireless network of the power wheelchair. The communications unit may for example be configured to communicate with the power wheelchair via a wireless network protocol based on e.g., on the IEEE 802.11 family of standards, such as Wi-Fi^{®}. The communications unit may alternatively be configured to communicate with the power wheelchair via a short-range wireless communications protocol such as Bluetooth^{®}. It should be noted that also other means of wireless communication is contemplated within the scope of the present embodiments, such is IR, ultrasound, radio.

Alternatively, the communications unit may be configured to communicate with the power wheelchair via a communications protocol adapted for a wired connection between the configuration device and the power wheelchair.

According to one embodiment the wheelchair functionality setting is seat positioning, wherein the graphical representation is a view of a body showing a bodily position obtained by the body in a seat position of a seating system of the power wheelchair.

It should here be noted that the bodily position shown may represent the parameters of the seating system. As an example, the displayed angular position of the lower legs, may actually represent the angular position of the leg rest.

Power wheelchairs often have pivot points, such as a knee pivot points, corresponding to the knee joint or knee joint axis of the user. By showing the bodily position as a graphical representation, a better understanding of how the user's body will be positioned for a certain set of wheelchair parameters that control actuators, i.e., seating system actuators, is obtained than if e.g., visualising the seating system or providing no visualisation at all.

The processing circuitry may be configured to transform angles of the body displayed on the display unit showing the bodily position to wheelchair actuator settings as wheelchair parameters.

According to one example the processing circuitry may be configured to perform an animation of the body from the first visual state to the second visual state on the display unit. The animation may be formed by the position of the body in the first visual state, the intermediate visual states, and the second visual state. The animation may for example show a sequence of movements from a seated position to a standing position, or from a standing position to a seated position.

According to one embodiment every visual state is a different bodily position.

According to one embodiment the wheelchair functionality setting is the driving properties of the power wheelchair.

According to one embodiment the graphical representation comprises a slider, or one or more knobs.

According to one embodiment every visual state is a different position of the slider or the one or more knobs.

According to one example the configuration device is configured to retrieve a set of parameters for a wheelchair functionality setting from the power wheelchair. The parameters that define a certain wheelchair functionality setting of the power wheelchair may thus be sampled or retrieved by the configuration tool. This may include the vast majority of parameters and settings that are configurable by the configuration tool, meaning that manual settings performed on the wheelchair may be sampled or retrieved by the configuration tool. It may particularly include, but not be limited to, seating settings, such as angles, extensions, etc.

According to one example, the processing circuitry may be configured to display a guide for configuring a wheelchair functionality setting. The guide may for example be a step-by-step guide for configuring a wheelchair functionality setting. The programming of a power wheelchair may thus be facilitated in the field.

The guide may according to one example provide guidance for repair, maintenance, or upgrading work on the power wheelchair. Such repair, maintenance or upgrading work may for example involve changing of actuators.

There is according to a second aspect of the present disclosure provided a method according to claim 13.

The method is a computer-implemented method.

According to one embodiment the determining involves determining a set of wheelchair parameters for every intermediate visual state between the first visual state and the second visual state, and the sending involves sending all sets to the power wheelchair.

According to one embodiment the determines involves determining an order of sequence of the sets associated with all the intermediate visual states, wherein the sending involves sending the order of sequence of the sets to the power wheelchair.

According to one embodiment the determining involves determining the set of wheelchair parameters based on a look-up table or database that associates every visual state of the graphical representation with a set of wheelchair parameters.

One embodiment comprises, prior to displaying, receiving an identifier associated with a power wheelchair, and in response thereto enabling displaying of the graphical representation on the display unit, wherein the sending involves sending the set of wheelchair parameters to the power wheelchair associated with the identifier.

Generally, all terms used in the claims are to be interpreted according to their ordinary meaning in the technical field, unless explicitly defined otherwise herein. All references to "a/an/the element, apparatus, component, means", etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 is a block diagram of an example of a configuration device;
Fig. 2 schematically shows the configuration device in communication with a power wheelchair;
Fig. 3 is a flowchart of a method of configuring settings of a power wheelchair;
Figs 4A-4B schematically show a first example of configuration of settings of a power wheelchair;
Figs 5A-5D schematically show a second example of configuration settings of a power wheelchair; and
Fig. 6 shows another example of configuration settings of a power wheelchair.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

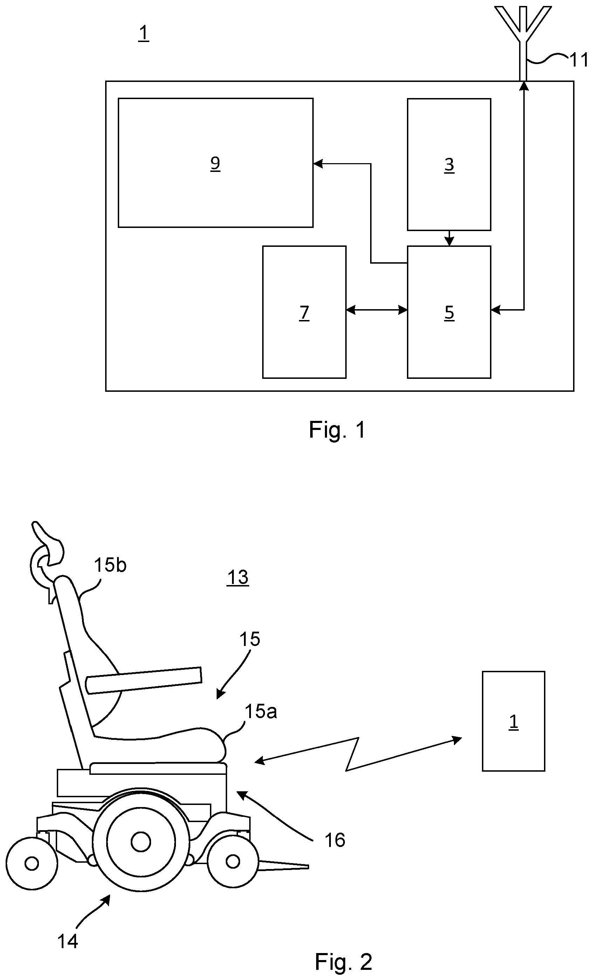

Fig. 1 schematically shows an example of a configuration device 1. The configuration device 1 is adapted to be used for configuring settings of power wheelchairs.

The configuration device 1 may be a handheld device. The configuration device 1 may for example be a dedicated handheld device for configuring settings of a power wheelchair, or it may be a mobile phone, a tablet computer or a laptop comprising computer code configured to execute the methods as disclosed herein.

The configuration device 1 comprises an input unit 3. The input unit 3 may for example be a hardware keyboard, or mouse, a touchscreen, or a combination thereof.

The input unit 3 is configured to detect a user input that is inputted to the configuration device 1.

The configuration device 1 comprises processing circuitry 5. The processing circuitry 5 may for example use any combination of one or more of a suitable central processing unit (CPU), multiprocessor, microcontroller, digital signal processor (DSP), application specific integrated circuit (ASIC), field programmable gate arrays (FPGA) etc., capable of executing any herein disclosed operations of configuring settings of a power wheelchair.

Depending on the type of processing circuitry 5, the control system may also comprise one or more storage medium 7. The one or more storage medium 7 is configured to communicate with the processing circuitry 5.

If present, the one or more storage medium 7 comprises computer code which when executed by the processing circuitry 5 causes the configuration device 1 to perform the steps of the methods described herein.

The/each storage medium 7 may for example be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory.

The configuration device 1 comprises a display unit 9. The processing circuitry 5 is configured to communicate with the display unit 9.

The configuration device 1 comprises a communications unit 11 configured to communicate with the processing circuitry 5 and with powered wheelchairs.

The communications unit 11 may be configured as an antenna for wireless communication or as a communications interface for wired communication.

Fig. 2 schematically shows a system of a power wheelchair 13 and the configuration device 1. The power wheelchair 13 and the configuration device 1 are configured to communicate with each other wirelessly, by wired connection, or by both.

The power wheelchair 13 may be a midwheel drive wheelchair as shown in the example in Fig. 2, a front wheel drive wheelchair, a rear-wheel drive wheelchair, or a four-wheel drive wheelchair.

The power wheelchair 13 comprises drive wheels **14** and motors (not shown) configured to drive the drive wheels 14.

The power wheelchair 13 comprises a chassis 16 from which the drive wheels **14** are suspended.

The power wheelchair 13 comprises a seating system 15. The seating system 15 comprises a seat 15a and a backrest 15b. The seating system 15 may also comprise a leg rest.

The seating system 15 may be mounted to the chassis 16.

The power wheelchair 13 comprises a plurality of actuators (not shown) configured to actuate or manoeuvre the seating system 15.

The power wheelchair 13 includes a control system (not shown). The control system is configured to control wheelchair functionality such as speed, turning and drive modes by controlling the motors, and manoeuvring of the seating system 15 by controlling the actuators. For example, the control system may be configured to manoeuvre the seating system 15 between a seated position as shown in Fig. 2, and a standing position, for instance, in which the seat 15a has been tilted forward to attain an orientation of e.g., 60° or more relative to the horizontal plane.

The configuration device 1 is configured to program settings of the control system, and thus the power wheelchair, for controlling the power wheelchair 13. These settings are not accessibly to the user via the user interface of the power wheelchair 13.

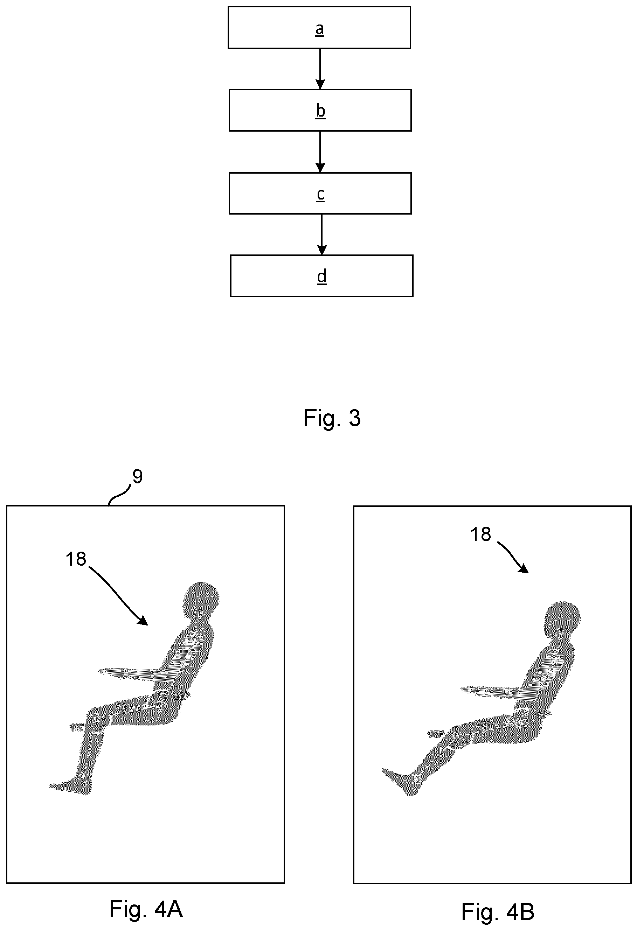

With reference to Fig. 3, a method of configuring settings of a power wheelchair such as power wheelchair 13 will now be described.

Typically, an employee of the power wheelchair manufacturer, an external technician, or a therapist may operate the configuration device 1 to configure the power wheelchair 13.

At some point, the connection or communications link is set up between the configuration device 1 and the power wheelchair 13. The connection may be wireless, or it may be wired. According to one example the configuration device 1 has to be close to the power wheelchair 13, for example within distance of reception of a local wireless network of the power wheelchair 13 or within distance for making short-range wireless communication possible. Alternatively, the connection or communications link may be a remote connection, for example via a wide area network.

The connection may be set up before step a) or any time after step a) but before step d) of the steps described in the following.

In a step a) a graphical representation of a wheelchair functionality setting is displayed on the display unit 9.

Prior to step a) the person operating the configuration device 1 may input an identifier associated with the power wheelchair 13 to the configuration device 1 via the input unit 3.

The processing circuitry 5 may be arranged to receive the identifier, and in response thereto enable displaying of the graphical representation on the display unit in step a).

The wheelchair functionality setting may for example be seat positioning. In this case, the graphical representation is a view of a body showing a bodily position obtained by the body in a seat position of a seating system of the power wheelchair 13.

In a step b) a user input changing the visual state of the graphical representation on the display unit from the first visual state to a second visual state is detected. The processing circuitry 5 may detect the user input changing the visual state of the graphical representation.

Every visual state of the graphical representation may be associated with a set of wheelchair parameter settings. Each such set of wheelchair parameter settings may be unique. There may thus be a one-to-one mapping between sets of parameter settings and visual states.

In a step c) a set of wheelchair parameters associated with the second visual state of the graphical representation are determined.

The processing circuitry 5 is arranged to determine the set of wheelchair parameters. The processing circuitry 5 may for example determine the set of wheelchair parameters associated with the second visual state based on a look-up table or database that associates every visual state of the graphical representation with a set of wheelchair parameters. Alternatively, the processing circuitry 5 may determine the set of wheelchair parameters associated with the second visual state based on a mapping, or mathematical function, between body angles of the body 18 in a visual state to corresponding actuator settings for setting the seating system 15 in a position in which the body 18 attains the angles when supported by the sating system 15.

The processing circuitry 5 may be arranged to determine a set of wheelchair parameters for every intermediate visual state between the first visual state and the second visual state.

The processing circuitry 5 may be arranged to determine an order of sequence of the sets associated with all the intermediate visual states.

In a step d) the set of wheelchair parameters determined by the processing circuitry 5 are sent to the power wheelchair 13. The wheelchair functionality settings for a certain function may thus be set for the power wheelchair 13.

If an identifier was received by the processing circuitry 5 prior to step a) the communications unit 11 may be arranged to send the set of wheelchair parameters to the power wheelchair 13 associated with the identifier.

The communications unit 5 may be arranged to send the order of sequence of all the sets, in case of several sets, to the power wheelchair 13.

When the power wheelchair 13 has received the set or sets of wheelchair parameters, the control system of the power wheelchair 13 may set the corresponding parameters for controlling the power wheelchair 13 to the values of the set or sets of wheelchair parameters received.

Examples of configuring settings of a power wheelchair will now be described with reference to Figs 4A to 6.

Figs 4A-4B show an example where the setting of a power wheelchair, such as power wheelchair 13, that is configured is a memory setting of the seating system.

On the power wheelchair, a pre-programmed memory setting may be selected by the user of the power wheelchair by means of a user interface of the power wheelchair. The pre-programming, or configuration, of the memory setting is made by means of the method disclosed herein.

When a memory setting is selected by means of the user interface, the seating system and the leg rest are set in positions or states in accordance with the set of wheelchair parameters obtained and stored by the power wheelchair as a result of step d) of the present method.

The graphical representation is in the example of Figs 4A-4B a view of a body 18 showing the bodily position of a user seated in a power wheelchair. The seating system 15 is according to the example not visualised. The first visual state of the graphical representation shows an upright seated bodily position.

Angles that may optionally be displayed in the graphical representation may be the angles of the corresponding components of the seating system, e.g., the seat, the backrest, and/or of the leg rest.

When configuring, or re-configuring, the memory setting of the seating system, the operator of the configuration device 1 may make a user input via the input unit 3, for example on the display unit 9 which may be a touch screen, changing the bodily position of the body 18 to a desired position.

The operator may for example change the leg rest position of the memory setting by moving the leg upwards, as shown in Fig. 4B. This corresponds to a change of the visual state of the graphical representation on the display unit 9 from the first visual state, shown in Fig. 4A to a second visual state.

The processing circuitry 5 is configured to determine the set of wheelchair parameters associated with the second visual state. The communications unit 11 then sends the set of wheelchair parameters associated with the second visual state to the power wheelchair. The settings of the control system concerning a memory setting of the seating system are thus configured or reprogrammed in this manner. When the wheelchair user next selects the corresponding memory setting on the user interface of the power wheelchair, the actuators of the seating system and leg rest will attain states that causes the user to be seated as show in Fig. 4B which in this case means that the leg rest attains a raised position.

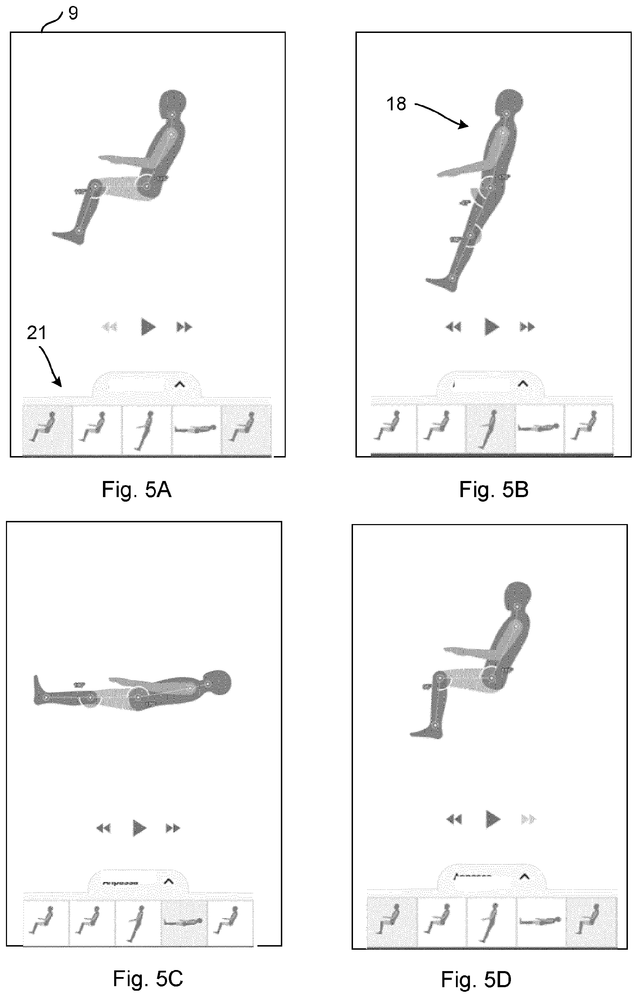

Figs 5A-5D show another example, where the setting of a power wheelchair, such as power wheelchair 13, that is configured is a sequence of movements of the seating system and the leg rest. The sequence of movements may for example be from an upright seated position to standing position and/or from standing position to the upright seated position.

The operator of the configuration device 1 may select a number of bodily positions of the body 18, and thus of the actuators of the seating system, to create a sequence of movements of the seating system and the leg rest. In the example shown in Figs 5A-5D, the number of user-settable positions of the body 18 in a sequence of movements may be five. However, more, or fewer user-settable positions are also contemplated in this embodiment.

Each of the user-settable positions may for example be selected from a menu 21 which shows the user-settable positions of the sequence. When the operator changes the bodily position in each user-settable position of the sequence, the graphical representation for that user-settable position of the sequence is changed from a first visual state to a second visual state.

In the example, the upright seated position in Fig. 5A is a first visual state of the graphical representation and represents a first user-settable position of the sequence of movements of the seating system. If the upright seated position in Fig. 5A would be changed, then the first visual state is changed to a second visual state of this user-settable position. Every user-settable position may thus be set from a first visual state to a second visual state to configure a complete sequence of movements of the seating system. Bodily positions of the body 18 between the first visual state and the second visual state are intermediate visual states. The intermediate visual states between the first visual state and the second visual state may be pre-set. Each intermediate visual state is associated with a set of wheelchair parameters. The wheelchair parameters of any visual state, i.e., first, second, and intermediate, are determined by the processing circuitry 5 for example by means of a look-up table, a database, or by means of a mathematical model/function.

Fig. 5B shows a standing position as a second-user definable position of the sequence.

Using the configuration device 1, the operator can configure a sequence of movements from e.g., a seated position to a standing position, and/or a seated position from a standing position, for example via a horizontal lying position shown in Fig. 5C.

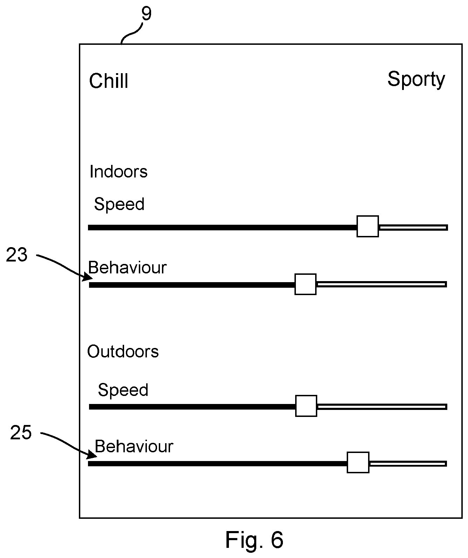

Fig. 6 shows another example where the setting of a power wheelchair, such as power wheelchair 13, that is configured is the driving properties of the power wheelchair 13. The driving properties may for example be driving modes.

The graphical representation may for instance comprise one or more sliders. Every visual state may be a different position of the slider. For example, slider 23 may set the behaviour of the power wheelchair indoors. The behaviour may for example be varied between a "chill" mode and a "sporty" mode, which influences e.g., acceleration, speed, braking characteristics, and steering. These are wheelchair parameters that are determined when the slider 23 is changed from a first position corresponding to a first visual state to a second position corresponding to a second visual state. Similarly, the slider 25 may set the behaviour of the power wheelchair outdoors.

The inventive concept has mainly been described above with reference to a few examples. However, as is readily appreciated by a person skilled in the art, other embodiments than the ones disclosed above are equally possible within the scope of the inventive concept, as defined by the appended claims.

The invention is defined solely by the appended claims.

## Claims

1. A configuration device (1) configured to program settings of a control system of a power wheelchair (13), comprising:
- a display unit (9) arranged to display a graphical representation of a wheelchair functionality setting,
- an input unit (3) arranged to detect a user input changing a visual state of the graphical representation on the display unit (9) from a first visual state to a second visual state,
wherein every visual state of the graphical representation is associated with a set of wheelchair parameter settings,
- processing circuitry (5) arranged to determine a set of wheelchair parameter settings associated with the second visual state of the graphical representation, the processing circuitry (5) being configured to communicate with the display unit (9), and to detect the user input changing the visual state of the graphical representation, and
- a communications unit (11) configured to communicate with the processing circuitry and with power wheelchairs, the communications unit (11) being arranged to send the set of wheelchair parameter settings determined by the processing circuitry (5) to a power wheelchair (13) to thereby program settings of the control system.

2. The configuration device (1) as claimed in claim 1, wherein the processing circuitry (5) is arranged to determine a set of wheelchair parameter settings for every intermediate visual state between the first visual state and the second visual state, and wherein the communications unit (5) is arranged to send all sets to the power wheelchair (13).

3. The configuration device (1) as claimed in claim 2, wherein the processing circuitry (5) is arranged to determine an order of sequence of the sets associated with all the intermediate visual states, wherein the communications unit (11) is arranged to send the order of sequence of the sets to the power wheelchair (13).

4. The configuration device (1) as claimed in any of the preceding claims, wherein the processing circuitry (5) is arranged to determine the set of wheelchair parameter settings based on a look-up table, a database, or a mathematical function that associates every visual state of the graphical representation with a set of wheelchair parameter settings.

5. The configuration device (1) as claimed in any of the preceding claims, wherein the wheelchair parameter settings include wheelchair actuator settings.

6. The configuration device (1) as claimed in any of the preceding claims, wherein the processing circuitry (5) is arranged to receive an identifier associated with a power wheelchair (13), and in response thereto enable displaying of the graphical representation on the display unit (9), wherein the communications unit (11) is arranged to send the set of wheelchair parameter settings to the power wheelchair (13) associated with the identifier.

7. The configuration device (1) as claimed in any of the preceding claims, wherein the wheelchair functionality setting is seat positioning, wherein the graphical representation is a view of a body (18) showing a bodily position obtained by the body (18) in a seat position of a seating system of the power wheelchair (13).

8. The configuration device (1) as claimed in claim 7, wherein every visual state is a different bodily position.

9. The configuration device (1) as claimed in any of claims 1-6, wherein the wheelchair functionality setting is driving properties of the power wheelchair (13).

10. The configuration device (1) as claimed in claim 9, wherein the graphical representation comprises a slider or one or more knobs.

11. The configuration device (1) as claimed in claim 10, wherein every visual state is a different position of the slider or the one or more knobs.

12. The configuration device (1) as claimed in any of the preceding claims, wherein the processing circuitry (5) is arranged to pair the set of wheelchair parameter settings with a specific user identifier, and wherein the communications unit (11) is configured to send the set of wheelchair parameter settings with the associated specific user identifier to a remote database or server for storing the set of wheelchair parameter settings and the associated specific user identifier, the wheelchair parameter settings thus becoming associated with a specific user.

13. Method of programming settings of a control system of a power wheelchair (13) by means of a configuration device (1) as claimed in any of the preceding claims, the method comprising:
a) displaying a graphical representation of a wheelchair functionality setting,
b) detecting a user input changing a visual state of the graphical representation from a first visual state to a second visual state,
wherein every visual state of the graphical representation is associated with a set of wheelchair parameter settings,
c) determining a set of wheelchair parameter settings associated with the second visual state of the graphical representation, and
d) sending the set of wheelchair parameter settings determined by the processing circuitry to a power wheelchair (13) to thereby program settings of the control system.

14. The method as claimed in claim 13, wherein the determining involves determining a set of wheelchair parameter settings for every intermediate visual state between the first visual state and the second visual state, and the sending involves sending all sets to the power wheelchair (13).

15. The method as claimed in claim 14, wherein the determines involves determining an order of sequence of the sets associated with all the intermediate visual states, wherein the sending involves sending the order of sequence of the sets to the power wheelchair (13).

16. The method as claimed in any of claims 13-15, wherein the determining involves determining the set of wheelchair parameter settings based on a look-up table, a database, or a mathematical function that associates every visual state of the graphical representation with a set of wheelchair parameter settings.

17. The method as claimed in any of claims 13-16, comprising, prior to displaying, receiving an identifier associated with a power wheelchair (13), and in response thereto enabling displaying of the graphical representation on the display unit, wherein the sending involves sending the set of wheelchair parameter settings to the power wheelchair (13) associated with the identifier.

## Patentansprüche

1. Konfigurationsvorrichtung (1), die so konfiguriert ist, dass sie Einstellungen eines Steuerungssystems eines angetriebenen Rollstuhls (13) programmiert, umfassend:
- eine Anzeigeeinheit (9), die so angeordnet ist, dass sie eine grafische Darstellung einer Rollstuhlfunktionalitätseinstellung anzeigt,
- eine Eingabeeinheit (3), die so angeordnet ist, dass sie eine Benutzereingabe erfasst, die einen visuellen Zustand der grafischen Darstellung auf der Anzeigeeinheit (9) von einem ersten visuellen Zustand in einen zweiten visuellen Zustand ändert,
wobei jeder visuelle Zustand der grafischen Darstellung einem Satz von Rollstuhlparametereinstellungen zugeordnet ist,
- Verarbeitungsschaltung (5), die so angeordnet ist, dass sie einen Satz von Rollstuhlparametereinstellungen bestimmt, der dem zweiten visuellen Zustand der grafischen Darstellung zugeordnet ist, wobei die Verarbeitungsschaltung (5) so konfiguriert ist, dass sie mit der Anzeigeeinheit (9) kommuniziert und die Benutzereingabe erfasst, die den visuellen Zustand der grafischen Darstellung ändert, und
- eine Kommunikationseinheit (11), die so konfiguriert ist, dass sie mit der Verarbeitungsschaltung und mit angetriebenen Rollstühlen kommuniziert, wobei die Kommunikationseinheit (11) so angeordnet ist, dass sie den Satz von Rollstuhlparametereinstellungen, der von der Verarbeitungsschaltung (5) bestimmt wird, an einen angetriebenen Rollstuhl (13) sendet, um dadurch Einstellungen des Steuerungssystems zu programmieren.

2. Konfigurationsvorrichtung (1) nach Anspruch 1, wobei die Verarbeitungsschaltung (5) so angeordnet ist, dass sie für jeden visuellen Zwischenzustand zwischen dem ersten visuellen Zustand und dem zweiten visuellen Zustand einen Satz von Rollstuhlparametereinstellungen bestimmt, und wobei die Kommunikationseinheit (5) so angeordnet ist, dass sie alle Sätze an den angetriebenen Rollstuhl (13) sendet.

3. Konfigurationsvorrichtung (1) nach Anspruch 2, wobei die Verarbeitungsschaltung (5) so angeordnet ist, dass sie eine Reihenfolge der Sätze bestimmt, die allen visuellen Zwischenzuständen zugeordnet sind, wobei die Kommunikationseinheit (11) so angeordnet ist, dass sie die Reihenfolge der Sätze an den angetriebenen Rollstuhl (13) sendet.

4. Konfigurationsvorrichtung (1) nach einem der vorhergehenden Ansprüche, wobei die Verarbeitungsschaltung (5) so angeordnet ist, dass sie den Satz von Rollstuhlparametereinstellungen anhand einer Nachschlagetabelle, einer Datenbank oder einer mathematischen Funktion bestimmt, die jeden visuellen Zustand der grafischen Darstellung einem Satz von Rollstuhlparametereinstellungen zuordnet.

5. Konfigurationsvorrichtung (1) nach einem der vorhergehenden Ansprüche, wobei die Rollstuhlparametereinstellungen die Rollstuhl-Linearantriebseinstellungen beinhalten.

6. Konfigurationsvorrichtung (1) nach einem der vorhergehenden Ansprüche, wobei die Verarbeitungsschaltung (5) so angeordnet ist, dass sie eine Kennung empfängt, die einem angetriebenen Rollstuhl (13) zugeordnet ist, und als Reaktion darauf die Anzeige der grafischen Darstellung auf der Anzeigeeinheit (9) aktiviert, wobei die Kommunikationseinheit (11) so angeordnet ist, dass sie den Satz von Rollstuhlparametereinstellungen an den angetriebenen Rollstuhl (13) sendet, der der Kennung zugeordnet ist.

7. Konfigurationsvorrichtung (1) nach einem der vorhergehenden Ansprüche, wobei die Rollstuhlfunktionalitätseinstellung die Sitzpositionierung ist, wobei die grafische Darstellung eine Ansicht eines Körpers (18) ist, die eine Körperposition zeigt, die durch den Körper (18) in einer Sitzposition eines Sitzsystems des angetriebenen Rollstuhls (13) eingenommen wird.

8. Konfigurationsvorrichtung (1) nach Anspruch 7, wobei jeder visuelle Zustand eine andere Körperposition ist.

9. Konfigurationsvorrichtung (1) nach einem der Ansprüche 1-6, wobei die Rollstuhlfunktionalitätseinstellung die Fahreigenschaften des angetriebenen Rollstuhls (13) betrifft.

10. Konfigurationsvorrichtung (1) nach Anspruch 9, wobei die grafische Darstellung einen Schieberegler oder einen oder mehrere Knöpfe umfasst.

11. Konfigurationsvorrichtung (1) nach Anspruch 10, wobei jeder visuelle Zustand eine andere Position des Schiebereglers oder des einen oder der mehreren Knöpfe ist.

12. Konfigurationsvorrichtung (1) nach einem der vorhergehenden Ansprüche, wobei die Verarbeitungsschaltung (5) so angeordnet ist, dass sie den Satz von Rollstuhlparametereinstellungen mit einer spezifischen Kennung verknüpft, und wobei die Kommunikationseinheit (11) so konfiguriert ist, dass sie den Satz von Rollstuhlparametereinstellungen mit der zugeordneten spezifischen Kennung an eine entfernte Datenbank oder einen Server zum Speichern des Satzes von Rollstuhlparametereinstellungen und der zugeordneten spezifischen Kennung sendet, wodurch die Rollstuhlparametereinstellungen einem spezifischen Benutzer zugeordnet werden.

13. Verfahren zur Programmierung von Einstellungen eines Steuerungssystems eines angetriebenen Rollstuhls (13) mittels einer Konfigurationsvorrichtung (1) nach einem der vorhergehenden Ansprüche, wobei das Verfahren Folgendes umfasst:
a) Anzeige einer grafischen Darstellung einer Rollstuhlfunktionalitätseinstellung,
b) Erfassung einer Benutzereingabe, die einen visuellen Zustand der grafischen Darstellung von einem ersten visuellen Zustand in einen zweiten visuellen Zustand ändert,
wobei jeder visuelle Zustand der grafischen Darstellung einem Satz von Rollstuhlparametereinstellungen zugeordnet ist,
c) Bestimmung eines Satzes von Rollstuhlparametereinstellungen, die dem zweiten visuellen Zustand der grafischen Darstellung zugeordnet sind, und
d) Sendung des Satzes von Rollstuhlparametereinstellungen, die von der Verarbeitungsschaltung bestimmt werden, an einen angetriebenen Rollstuhl (13), um dadurch Einstellungen des Steuerungssystems zu programmieren.

14. Verfahren nach Anspruch 13, wobei die Bestimmung die Bestimmung eines Satzes von Rollstuhlparametereinstellungen für jeden visuellen Zwischenzustand zwischen dem ersten visuellen Zustand und dem zweiten visuellen Zustand einschließt, und die Sendung die Sendung aller Sätze an den angetriebenen Rollstuhl (13) einschließt.

15. Verfahren nach Anspruch 14, wobei die Bestimmung die Bestimmung einer Reihenfolge der Sätze einschließt, die allen visuellen Zwischenzuständen zugeordnet sind, wobei die Sendung die Sendung der Reihenfolge der Sätze an den angetriebenen Rollstuhl (13) einschließt.

16. Verfahren nach einem der Ansprüche 13-15, wobei die Bestimmung die Bestimmung des Satzes von Rollstuhlparametereinstellungen anhand einer Nachschlagetabelle, einer Datenbank oder einer mathematischen Funktion einschließt, die jeden visuellen Zustand der grafischen Darstellung einem Satz von Rollstuhlparametereinstellungen zuordnet.

17. Verfahren nach einem der Ansprüche 13-16, umfassend, vor der Anzeige, den Empfang einer Kennung, die einem angetriebenen Rollstuhl (13) zugeordnet ist, und als Reaktion darauf das Aktivieren der Anzeige der grafischen Darstellung auf der Anzeigeeinheit, wobei die Sendung die Sendung des Satzes von Rollstuhlparametereinstellungen an den angetriebenen Rollstuhl (13) einschließt, der der Kennung zugeordnet ist.

## Revendications

1. Dispositif de configuration (1) destiné à programmer des réglages d'un système de commande d'un fauteuil roulant électrique (13), comprenant :
- une unité d'affichage (9) conçue pour afficher une représentation graphique d'un réglage de fonctionnalité de fauteuil roulant,
- une unité d'entrée (3) conçue pour détecter une entrée d'utilisateur changeant un état visuel de la représentation graphique sur l'unité d'affichage (9) d'un premier état visuel à un deuxième état visuel,
dans lequel chaque état visuel de la représentation graphique est associé à un ensemble de réglages de paramètres de fauteuil roulant,
- des circuits de traitement (5) conçus pour déterminer un ensemble de réglages de paramètres de fauteuil roulant associés au deuxième état visuel de la représentation graphique, les circuits de traitement (5) étant configurés pour communiquer avec l'unité d'affichage (9) et pour détecter l'entrée d'utilisateur changeant l'état visuel de la représentation graphique, et
- une unité de communication (11) configurée pour communiquer avec les circuits de traitement et avec des fauteuils roulants électriques, l'unité de communication (11) étant conçue pour envoyer l'ensemble de réglages de paramètres de fauteuil roulant déterminé par le circuits de traitement (5) à un fauteuil roulant électrique (13) pour ainsi programmer des réglages du système de commande.

2. Dispositif de configuration (1) selon la revendication 1, dans lequel les circuits de traitement (5) sont conçus pour déterminer un ensemble de réglages de paramètres de fauteuil roulant pour chaque état visuel intermédiaire entre le premier état visuel et le deuxième état visuel, et dans lequel l'unité de communication (5) est conçue pour envoyer tous les ensembles au fauteuil roulant électrique (13).

3. Dispositif de configuration (1) selon la revendication 2, dans lequel les circuits de traitement (5) sont conçus pour déterminer un ordre de séquence des ensembles associés à tous les états visuels intermédiaires, dans lequel l'unité de communication (11) est conçue pour envoyer l'ordre de séquence des ensembles au fauteuil roulant électrique (13).

4. Dispositif de configuration (1) selon l'une quelconque des revendications précédentes, dans lequel les circuits de traitement (5) sont conçus pour déterminer l'ensemble de réglages de paramètres de fauteuil roulant sur la base d'un tableau de consultation, d'une base de données ou d'une fonction mathématique associant chaque état visuel de la représentation graphique à un ensemble de réglages de paramètres de fauteuil roulant.

5. Dispositif de configuration (1) selon l'une quelconque des revendications précédentes, dans lequel les réglages de paramètres de fauteuil roulant incluent des réglages d'actionneur de fauteuil roulant.

6. Dispositif de configuration (1) selon l'une quelconque des revendications précédentes, dans lequel les circuits de traitement (5) sont conçus pour recevoir un identifiant associé à un fauteuil roulant électrique (13) et, en réponse à celui-ci, permettre l'affichage de la représentation graphique sur l'unité d'affichage (9), dans lequel l'unité de communication (11) est conçue pour envoyer l'ensemble de réglages de paramètres de fauteuil roulant au fauteuil roulant électrique (13) associé à l'identifiant.

7. Dispositif de configuration (1) selon l'une quelconque des revendications précédentes, dans lequel le réglage de fonctionnalité de fauteuil roulant consiste dans le positionnement du siège, dans lequel la représentation graphique consiste dans une vue d'un corps (18) montrant une position corporelle adoptée par le corps (18) dans une position de siège d'un système d'assise du fauteuil roulant électrique (13).

8. Dispositif de configuration (1) selon la revendication 7, dans lequel chaque état visuel est une position corporelle différente.

9. Dispositif de configuration (1) selon l'une quelconque des revendications 1 à 6, dans lequel le réglage de fonctionnalité de fauteuil roulant consiste dans des propriétés de conduite du fauteuil roulant électrique (13).

10. Dispositif de configuration (1) selon la revendication 9, dans lequel la représentation graphique comprend un curseur ou un ou plusieurs boutons.

11. Dispositif de configuration (1) selon la revendication 10, dans lequel chaque état visuel consiste dans une position différente du curseur ou des un ou plusieurs boutons.

12. Dispositif de configuration (1) selon l'une quelconque des revendications précédentes, dans lequel les circuits de traitement (5) sont conçus pour coupler l'ensemble de réglages de paramètres de fauteuil roulant à un identifiant d'utilisateur spécifique, et dans lequel l'unité de communication (11) est configurée pour envoyer l'ensemble de réglages de paramètres de fauteuil roulant avec l'identifiant d'utilisateur spécifique associé à une base de données ou un serveur à distance en vue du stockage de l'ensemble de réglages de paramètres de fauteuil roulant et de l'identifiant d'utilisateur spécifique associé, les réglages de paramètres de fauteuil roulant étant ainsi associés à un utilisateur spécifique.

13. Procédé de programmation de réglages d'un système de commande d'un fauteuil roulant électrique (13) au moyen d'un dispositif de configuration (1) selon l'une quelconque des revendications précédentes, le procédé comprenant :
a) l'affichage d'une représentation graphique d'un réglage de fonctionnalité de fauteuil roulant,
b) la détection d'une entrée d'utilisateur changeant un état visuel de la représentation graphique d'un premier état visuel à un deuxième état visuel,
dans lequel chaque état visuel de la représentation graphique est associé à un ensemble de réglages de paramètres de fauteuil roulant,
c) la détermination d'un ensemble de réglages de paramètres de fauteuil roulant associés au deuxième état visuel de la représentation graphique, et
d) l'envoi de l'ensemble de réglages de paramètres de fauteuil roulant déterminé par les circuits de traitement à un fauteuil roulant électrique (13) pour ainsi programmer des réglages du système de commande.

14. Procédé selon la revendication 13, dans lequel la détermination comprend la détermination d'un ensemble de réglages de paramètres de fauteuil roulant pour chaque état visuel intermédiaire entre le premier état visuel et le deuxième état visuel, et l'envoi comprend l'envoi de tous les ensembles au fauteuil roulant électrique (13).

15. Procédé selon la revendication 14, dans lequel la détermination comprend la détermination d'un ordre de séquence des ensembles associés à tous les états visuels intermédiaires, dans lequel l'envoi comprend l'envoi de l'ordre de séquence des ensembles au fauteuil roulant électrique (13).

16. Procédé selon l'une quelconque des revendications 13 à 15, dans lequel la détermination comprend la détermination de l'ensemble de réglages de paramètres de fauteuil roulant sur la base d'un tableau de consultation, d'une base de données ou d'une fonction mathématique associant chaque état visuel de la représentation graphique à un ensemble de réglages de paramètres de fauteuil roulant.

17. Procédé selon l'une quelconque des revendications 13 à 16, comprenant, avant l'affichage, la réception d'un identifiant associé à un fauteuil roulant électrique (13) et, en réponse à celui-ci, l'affichage de la représentation graphique sur l'unité d'affichage, dans lequel l'envoi comprend l'envoi de l'ensemble de réglages de paramètres de fauteuil roulant au fauteuil roulant électrique (13) associé à l'identifiant.
